(19) Europäisches Patentamt
European Patent Office
Office européen des brevets

(11) **EP 3 917 038 B1**

(12) **EUROPEAN PATENT SPECIFICATION**

(45) Date of publication and mention
of the grant of the patent:
**24.09.2025 Bulletin 2025/39**

(21) Application number: **19923579.7**

(22) Date of filing: **29.03.2019**

(51) International Patent Classification (IPC):
**H04B 15/00** (2006.01)        **H04B 1/02** (2006.01)

(52) Cooperative Patent Classification (CPC):
**H04B 1/0475; Y02D 30/70**

(86) International application number:
**PCT/CN2019/080616**

(87) International publication number:
**WO 2020/199012 (08.10.2020 Gazette 2020/41)**

(54) **TERMINAL DEVICE, TRANSMITTER, BASEBAND CHIP, AND RADIOFREQUENCY SIGNAL
GENERATING METHOD**

ENDGERÄT, SENDER, BASISBANDCHIP UND VERFAHREN ZUR ERZEUGUNG EINES
RADIOFREQUENZSIGNALS

DISPOSITIF TERMINAL, ÉMETTEUR, PUCE DE BANDE DE BASE, ET PROCÉDÉ DE
GÉNÉRATION DE SIGNAL RADIOFRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.12.2021 Bulletin 2021/48**

(73) Proprietor: **Huawei Technologies Co., Ltd.
Shenzhen, Guangdong 518129 (CN)**

(72) Inventor: **CHANG, Hsiang Hui
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A- 2 747 293          EP-A1- 3 016 340
WO-A1-2017/052956          CN-A- 103 441 733
CN-A- 107 005 527          US-A1- 2014 044 214
US-A1- 2014 287 707          US-A1- 2016 182 097
US-A1- 2017 310 458          US-B1- 9 086 476**

## Description

### TECHNICAL FIELD

This application relates to the field of communications technologies, and in particular, to a terminal device, a transmitter, and a radio frequency signal generation method.

### BACKGROUND

Document US 2017/310458 A1 discloses a fast frequency hopping technique within a phased lock loop. Document EP 3 016 340 A1 discloses a method for pushing or load pulling a VCO frequency to avoid 4FMod spurious signals.

In a long term evolution (long term evolution, LTE) communications system, when a terminal device sends uplink data to a base station, a transmitter in the terminal device determines, based on location information that is of a resource block (resource block, RB) occupied by the terminal device to send an RB signal and that is carried in an uplink indication delivered by the base station, an offset $\Delta f$ of a center frequency of the RB signal relative to a zero frequency, and shifts the center frequency of the RB signal to $\Delta f$. An up-converter performs up-conversion on the RB signal whose center frequency is shifted to obtain a radio frequency signal. Then, an amplifier amplifies the obtained radio frequency signal and sends the amplified radio frequency signal to the base station by using an antenna.

When the terminal device transmits a single RB signal (that is, an LTE 1 RB signal), a counter 3rd order intermodulation product (counter 3rd order intermodulation products, CIM3) is generated due to nonlinearity of the transmitter in the terminal device, and a center frequency of the CIM3 is located in a guard band, causing interference to communication in the guard band.

### SUMMARY

This application provides a terminal device, a transmitter, and a radio frequency signal generation method according to the independent claims, so as to reduce interference of CIM3 to a guard band without increasing costs and power consumption of a device that generates a radio frequency signal.

### BRIEF DESCRIPTION OF DRAWINGS

FIG. 1 is a schematic structural diagram of a transmitter according to this application;
FIG. 2 is a schematic diagram of a process in which a transmitter generates a radio frequency signal in a current technology;
FIG. 3 is a schematic diagram of a radio frequency signal generated by a transmitter in a current technology;
FIG. 4 is a schematic flowchart of eliminating CIM3 in a current technology;
FIG. 5 is a schematic structural diagram of a transmitter used to eliminate CIM3 in a current technology;
FIG. 6 is a schematic structural diagram of a terminal device according to this application;
FIG. 7 is a schematic structural diagram of another terminal device according to this application;
FIG. 8 is a schematic diagram of a process of generating a radio frequency signal according to this application;
FIG. 9 is a schematic diagram of a radio frequency signal generated by a transmitter in a current technology and a radio frequency signal generated by using a radio frequency signal generation method provided in this application;
FIG. 10 is a schematic diagram of a radio frequency signal generated by using a radio frequency signal generation method according to this application;
FIG. 11 is a schematic structural diagram of a transmitter according to this application;
FIG. 12 is a schematic structural diagram of a baseband chip according to this application; and
FIG. 13 is a schematic flowchart of a radio frequency signal generation method according to this application.

### DESCRIPTION OF EMBODIMENTS

To make the objectives, technical solutions, and advantages of this application clearer, the following further describes this application in detail with reference to the accompanying drawings.

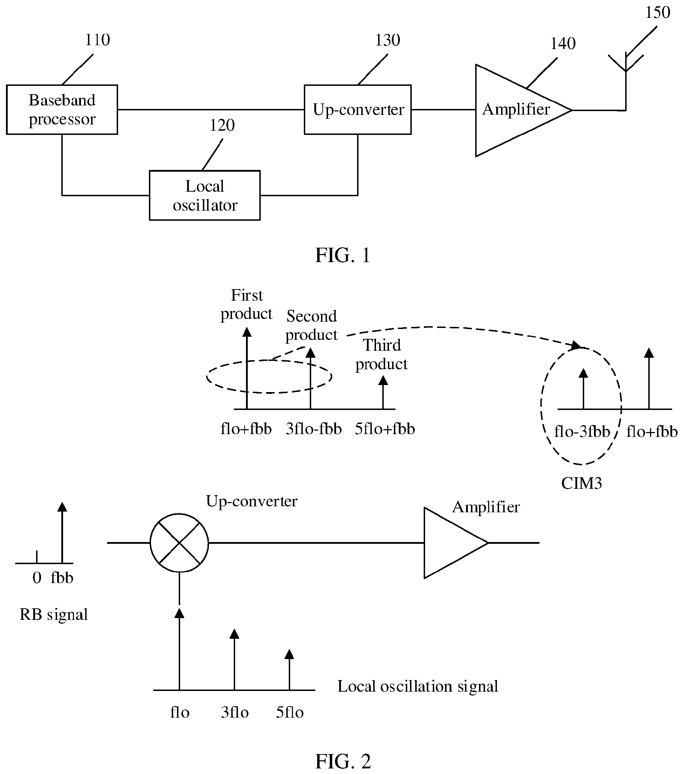

As shown in FIG. 1, a transmitter in a terminal device mainly includes a baseband processor 110, a local oscillator (local oscillator, LO) 120, an up-converter 130, and an amplifier 140. The baseband processor 110 is configured to: generate an RB signal, determine an offset of a center frequency of a to-be-sent RB signal relative to a zero frequency, and shift the center frequency of the RB signal based on the determined offset; and control a center frequency of a local oscillation signal generated by the up-converter 130. The up-converter 130 is configured to perform, by using the local oscillation signal, up-conversion processing on the RB signal whose center frequency is shifted, to obtain a radio frequency signal, where the local oscillator may be implemented by using a phase locked loop (phase locked loop, PLL). The amplifier 140 is configured to amplify the radio frequency signal obtained by the up-converter, so as to facilitate transmission by an antenna. Further, the transmitter may further include an antenna 150, configured to transmit the radio frequency signal amplified by the amplifier 140.

As shown in FIG. 2, for an RB signal sent by the terminal device in any subframe, the terminal device uses the baseband processor 110 in the transmitter to determine, based on location information that is of an RB occupied by the terminal device to send the RB signal and that is carried in an uplink indication delivered by a base station, an offset $\Delta f=fbb$ of a center frequency of the RB signal relative to a zero frequency, and shift the center frequency of the RB signal to fbb. In this case, the RB signal that needs to be sent by the terminal device may be expressed as cos(2*pi*fbb)+jsin(2*pi*fbb), where fbb represents the center frequency of the RB signal.

The up-converter 130 is an orthogonal system, and a function of the up-converter 130 may be understood as multiplication of the RB signal and the local oscillation signal. A fundamental wave of the local oscillation signal may be expressed as cos(2*pi*flo)-jsin(2*pi*flo), a third harmonic may be expressed as cos(2*pi*3flo)+jsin(2*pi*3flo), and a fifth harmonic may be expressed as cos(2*pi*5flo)-jsin(2*pi*5flo) (because odd-numbered harmonics of the local oscillation signal have great impact on generation of CIM3, only the odd-numbered harmonics of the local oscillation signal are listed herein), where flo represents the center frequency of the local oscillation signal. The transmitter in the terminal device performs, by using an up-converter, up-conversion on the RB signal whose center frequency is shifted, to obtain a radio frequency signal, where the radio frequency signal includes at least a first product, a second product, and a third product that are shown in the following:

The first product has a center frequency of flo+fbb. The second product is a third harmonic product with a center frequency of 3flo-fbb. The third product is a fifth harmonic product with a center frequency of 5flo+fbb.

The first product is an expected radio frequency signal, which may be expressed as cos(2*pi*fbb)*cos(2*pi*flo) +sin(2*pi*fbb)*[-sin(2*pi*flo)]=cos[(2*pi*(fbb+flo)]. A center frequency of the first product is flo+fbb.

The second product is a third harmonic product, which may be expressed as cos(2*pi*fbb)*cos(2*pi*3flo) +sin(2*pi*fbb)*[sin(2*pi*3flo)]=cos[(2*pi*(-fbb+3flo)]. A center frequency of the second product is 3flo-fbb.

The third product is a fifth harmonic product, which may be expressed as cos(2*pi*fbb)*cos(2*pi*5flo) +sin(2*pi*fbb)*[-sin(2*pi*5flo)]=cos[(2*pi*(fbb+5flo)]. A center frequency of the third product is 5flo+fbb.

A relationship between an input signal X and an output signal Y of the amplifier 140 may be expressed as $Y=aX+(aX)^3$, where a represents a gain of the amplifier and $(aX)^3$ represents nonlinearity of the amplifier. The terminal device amplifies the obtained radio frequency signal by using the amplifier 140 in the transmitter. A useful signal without distortion that is output by the amplifier 140 is a*cos[(2*pi*(fbb+flo)], and a center frequency of the useful signal is flo+fbb. A distorted signal output by the amplifier is $\{cos[2*pi*(fbb+flo)]+cos[2*pi*(-fbb+3flo)]+cos[2*pi*(fbb+5flo)]\}^3$.

One item of an expanded polynomial corresponding to the distorted signal output by the amplifier 140 (the first product and the second product output by the up-converter are generated through nonlinear distortion of the amplifier) is as follows:

$$\{cos[2*pi*(fbb+flo)]\}^2*cos[2*pi*(-fbb+3flo)]$$

$$=\{cos[2*pi*2(fbb+flo)]+1\}/2*cos[2*pi*(-fbb+3flo)]$$

$$=1/2*[cos[2*pi*2(fbb+flo)]*cos[2*pi*(-fbb+3flo)]+cos[2*pi*(-fbb+3flo)]]$$

$$=1/2*[(1/2)*cos[2*pi*(fbb+5flo)+cos[2*pi*(-3fbb+flo)]]+cos[2*pi*(-fbb+3flo)]]$$

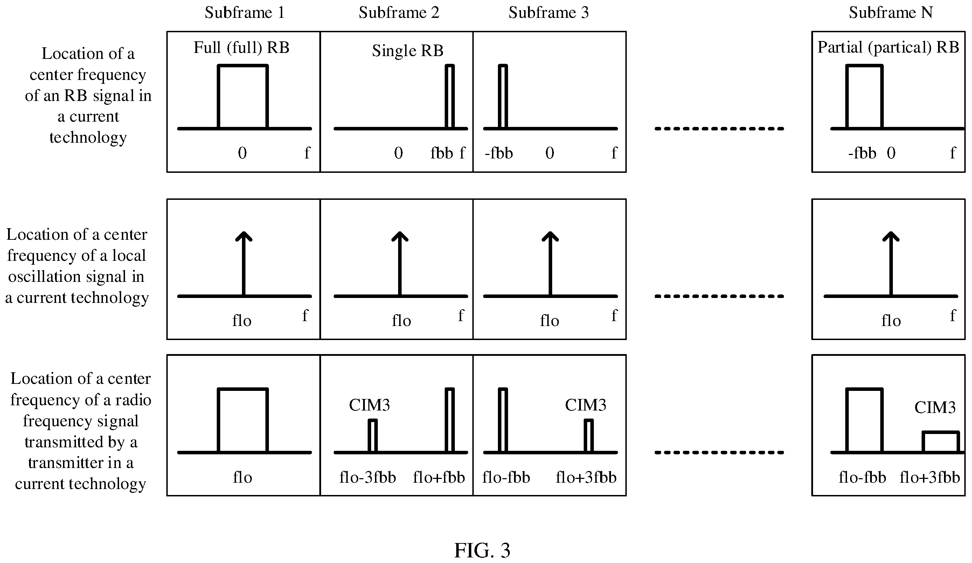

In the foregoing expression, cos[2*pi*(-3fbb+flo) represents CIM3 generated through distortion of the amplifier 140, and a center frequency of the CIM3 is flo-3fbb, which is located in a guard band. In this case, the radio frequency signal generated by the transmitter in the terminal device is shown in FIG. 3. It can be seen from FIG. 3 that the terminal device generates CIM3 when sending a single RB signal or a partial (partical) RB signal.

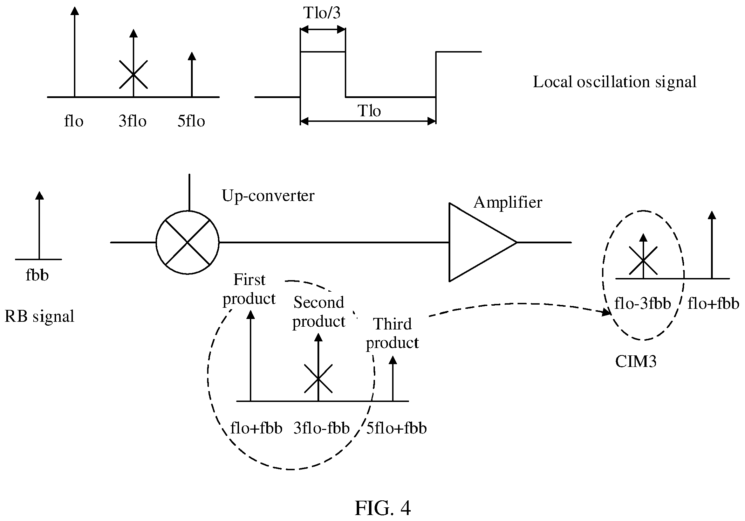

In a current technology, interference of the CIM3 to the guard band is reduced mainly by reducing a size of the third harmonic product output by the up-converter in the transmitter. For example, as shown in FIG. 4, the transmitter uses a local oscillation signal with a duty cycle (duty cycle) of 33% (that is, the duty cycle is Tlo/3, where Tlo represents a periodicity of the local oscillation signal). Because of a characteristic of the local oscillation signal, the third harmonic of the local oscillation signal is ideally zero. In this case, the third harmonic product output by the up-converter becomes quite small or even does not exist. Even if a post-amplifier has nonlinear distortion, the CIM3 can still be effectively controlled.

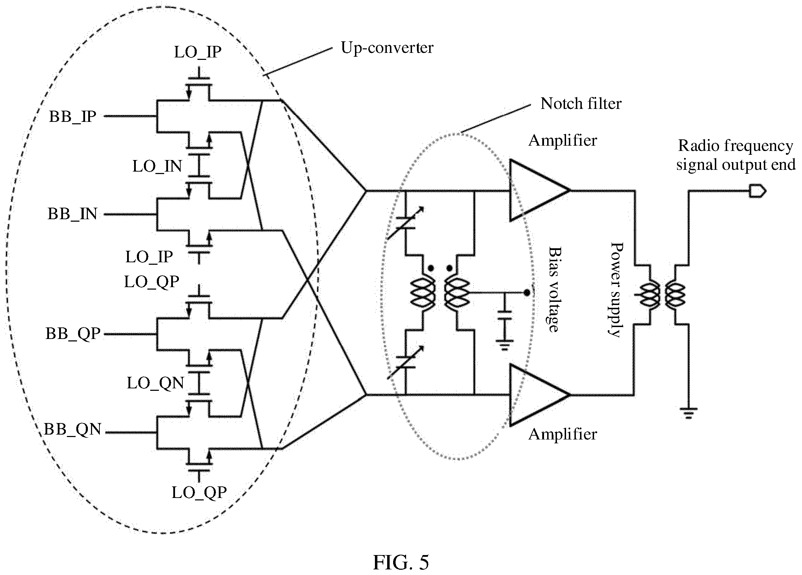

However, a circuit structure for generating the local oscillation signal with a duty cycle of 33% is relatively complex, which increases costs and power consumption of the transmitter. For another example, as shown in FIG. 5, a notch filter (notch filter) is added to an output end of the up-converter of the transmitter to filter out the third harmonic product that is output by the up-converter, thereby reducing the interference of the CIM3 to the guard band. However, adding a notch filter also increases the costs and power consumption of the transmitter. In addition, in the current technology, interference of the CIM3 to the guard band is reduced by increasing linearity of the amplifier in the transmitter. However, increasing the linearity of the amplifier in the transmitter also increases the costs and power consumption of the transmitter.

To resolve the foregoing problems in the current technology, this application provides a terminal device, a transmitter, a baseband chip, and a radio frequency signal generation method. The method and the apparatus described in this embodiment of this application are based on a same concept. Because problem resolving principles of the method and the apparatus are similar, mutual reference may be made to implementations of the apparatus and the method, and repeated parts are not described again.

To eliminate interference caused to the guard band by CIM3 that is generated in a scenario in which the terminal device transmits a single RB signal or a partial (partical) RB signal (the partial RB signal includes at least two single RB signals that are consecutive in frequency domain), that is, in a scenario in which a center frequency of an RB signal to be transmitted by the terminal device is not at a zero frequency, this embodiment of this application mainly aims at improving a radio frequency signal generation method for the terminal device. The terminal device may be a device having a wireless communication function, such as a mobile phone, a tablet computer, a notebook computer, or a smartwatch. However, it should be understood that the terminal device provided in this embodiment of this application is a complete terminal device, and also has a structure (such as a display screen or a camera) of a known terminal device. Only a component that is related to improvement of a radio frequency signal generation manner in the terminal device is described herein. Other components are not described in detail.

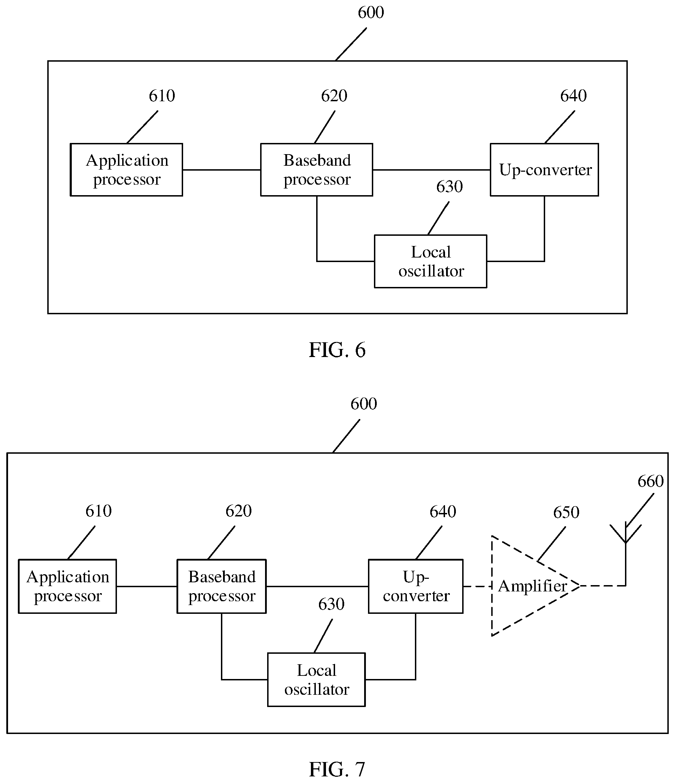

As shown in FIG. 6, this application provides a terminal device 600. The terminal device 600 includes an application processor 610, a baseband processor 620, a local oscillator 630, and an up-converter 640. The baseband processor 620 is separately connected to the application processor 610, the local oscillator 630, and the up-converter 640, and the local oscillator 630 is further connected to the up-converter 640.

The following describes in detail the foregoing components that form the terminal device 600 with reference to FIG. 6.

The application processor 610 is configured to trigger the baseband processor 620 to send a resource block RB signal.

The baseband processor 620 is configured to: determine an offset $\Delta f$ of a center frequency of the RB signal relative to a zero frequency, and control the local oscillator 630 to adjust a center frequency flo of a local oscillation signal generated by the local oscillator 630 to flo+$\Delta f$.

The local oscillator 630 is configured to adjust, under control of the baseband processor 620, the center frequency flo of the local oscillation signal generated by the local oscillator 630 to flo+$\Delta f$.

The up-converter 640 is configured to generate a radio frequency signal, where the radio frequency signal is obtained by performing, by the up-converter 640, up-conversion processing on the RB signal whose center frequency is zero by using the local oscillation signal whose center frequency is adjusted.

The RB signal is a basic unit that forms a baseband signal, the RB signal may be a single RB signal or a partial RB signal, and the partial RB signal includes a plurality of single RB signals that are consecutive in frequency domain. When the RB signal is a partial RB signal, a center frequency of the partial RB signal is a frequency at a central location of an RB occupied by the plurality of single RB signals that are consecutive in frequency domain.

In a specific implementation, when determining the offset $\Delta f$ of the center frequency of the RB signal relative to the zero frequency, the baseband processor 620 is specifically configured to: obtain uplink indication information sent by a base station, where the uplink indication information includes location information of an RB occupied by the RB signal; and determine the offset $\Delta f$ of the center frequency of the RB signal relative to the zero frequency based on the location information of the RB occupied by the RB signal.

Specifically, the uplink indication information sent by the base station is an uplink grant indication (uplink grant indication), and the uplink grant indication includes the location information of the RB occupied by the RB signal (a start location and an end location of the RB occupied by the RB signal).

Further, when controlling the local oscillator 630 to adjust the center frequency flo of the local oscillation signal generated by the local oscillator 630 to flo+$\Delta f$, the baseband processor 620 is specifically configured to generate a control signal based on the offset $\Delta f$ of the center frequency of the RB signal relative to the zero frequency, where the control signal is used to control the local oscillator 630 to shift the center frequency flo of the local oscillation signal to flo+$\Delta f$. Specifically, the local oscillator 630 may be implemented by using a phase-locked loop, and the phase-locked loop can shift the center frequency flo of the local oscillation signal to flo+$\Delta f$ under control of the control signal generated by the baseband processor 620.

Further, as shown in FIG. 7, the terminal device 600 may further include an amplifier 650, configured to amplify a radio frequency signal generated by the up-converter 640, so as to facilitate transmission by an antenna.

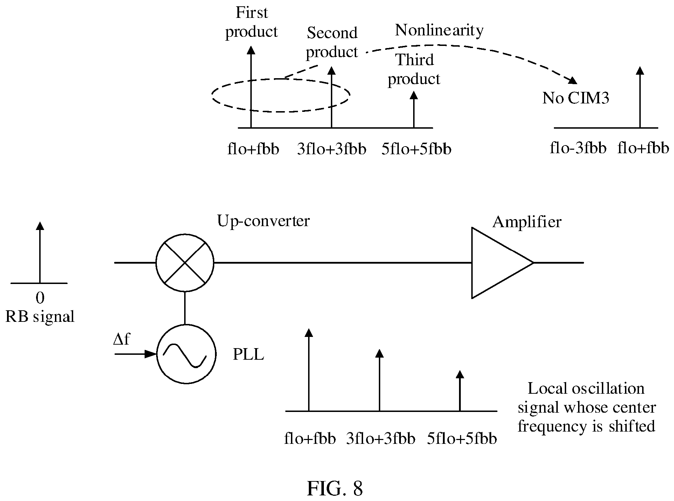

As shown in FIG. 8, it is assumed that the offset $\Delta f$ of the RB signal determined by the baseband processor 620 is fbb. The RB signal at the zero frequency may be expressed as cos(2*pi*0)+jsin(2*pi*0). A fundamental wave of the local oscillation signal whose center frequency is flo+fbb may be expressed as cos(2*pi*(flo+fbb))-jsin(2*pi*(flo+fbb)). A third harmonic of the local oscillation signal whose center frequency is flo+fbb may be expressed as cos(2*pi*(3flo+3fbb))+jsin(2*pi*(3flo+3fbb)). A fifth harmonic of the local oscillation signal whose center frequency is flo+fbb may be expressed as cos(2*pi*(5flo+5fbb))-jsin(2*pi*(Sflo+Sfbb)). In this case, the radio frequency signal generated by the up-converter 640 includes at least the following three products:

A first product, that is, an expected radio frequency signal, cos(2*pi*0)*cos(2*pi*(flo+fbb))+sin(2*pi*0)*[-sin(2*pi*(flo+fbb))]=cos[(2*pi*(fbb+flo)]. A center frequency of the first product is flo+fbb.

A second product, that is, the third harmonic product, cos(2*pi*0)*cos(2*pi*(3flo+3fbb))+sin(2*pi*0)*[sin(2*pi*(3flo+fbb))]=cos[(2*pi*(3fbb+3flo)]. A center frequency of the second product is 3flo+3fbb.

A third product, that is, the fifth harmonic product, cos(2*pi*0)*cos(2*pi*(5flo+5fbb))+sin(2*pi*0)*[-sin(2*pi*(5flo+5fbb))]=cos[(2*pi*(5fbb+5flo)]. A center frequency of the third product is Sflo+Sfbb.

When a relationship between an input signal X and an output signal Y of the amplifier 650 is $Y=aX+(aX)^3$, a useful signal without distortion that is output by the amplifier 650 is a*cos[(2*pi*(fbb+flo)], and a frequency of the useful signal is flo+fbb. A distorted signal output by the amplifier due to nonlinearity of the amplifier is $\{cos[2*pi*(3fbb+3flo)]+cos[2*pi*(3fbb+3flo)]+cos[2*pi*(5fbb+5flo)]\}^3$.

After a polynomial corresponding to the distorted signal output by the amplifier 650 is expanded, one item of generating CIM3 corresponding to a current technology (the local oscillation signal is not shifted) is as follows:

$$\{cos[2*pi*(fbb+flo)]\}^2*cos[2*pi*(3fbb+3flo)]$$

$$=\{cos[2*pi*2(fbb+flo)]+1\}/2*cos[2*pi*(3fbb+3flo)]$$

$$=1/2*[cos[2*pi*2(fbb+flo)]*cos[2*pi*(3fbb+3flo)]+cos[2*pi*(3fbb+3flo)]]$$

$$=1/2*[(1/2)*cos[2*pi*(5fbb+5flo)+cos[2*pi*(fbb+flo)]]+cos[2*pi*(3fbb+3flo)]]$$

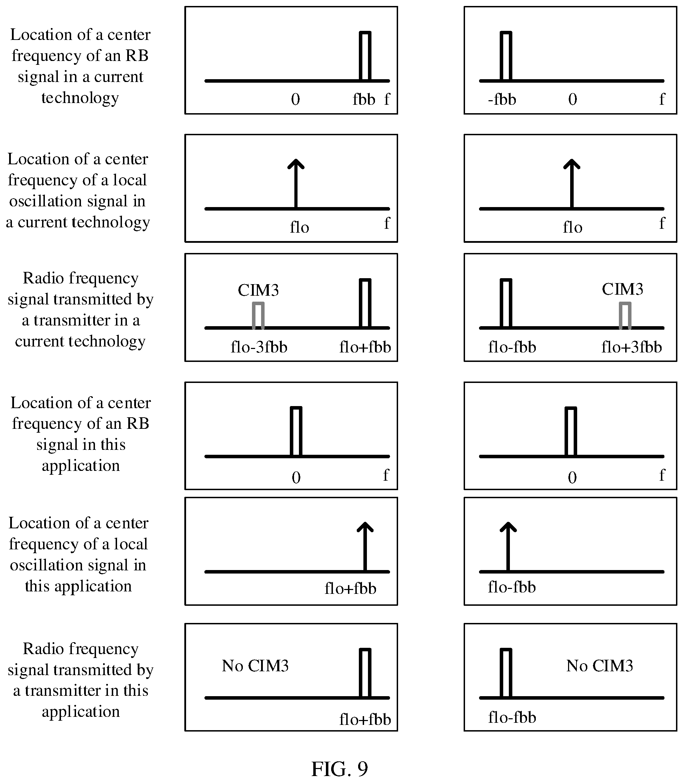

Unlike the current technology, no CIM3 signal whose center frequency is flo-3fbb is generated in the foregoing expression, that is, the baseband processor 620 in the terminal device 600 maintains the frequency of the RB signal at a zero frequency. Controlling, based on the offset of the center frequency of the RB signal, the local oscillator 630 to shift the local oscillation signal accordingly does not comply with a mechanism for generating CIM3, and does not generate CIM3, and therefore can eliminate interference caused by CIM3 to communication in the guard band, as shown in FIG. 9. In addition, because the CIM3 is not generated in the radio frequency signal that is generated by the up-converter 640 in the terminal device 600, there is no need to perform filtering processing on the obtained radio frequency signal after the radio frequency signal is generated by the terminal device 600, or generate a local oscillation signal with a duty cycle of 33% to reduce interference of CIM3, and further, there is no need to add hardware for eliminating the CIM3 to the terminal device 600, thereby reducing costs of the terminal device 600.

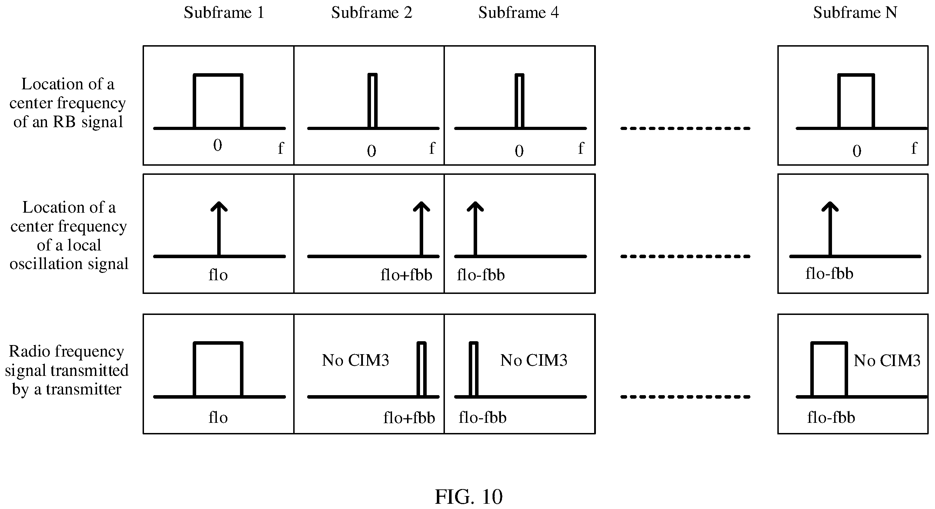

Similarly, when the terminal device 600 sends an RB signal in each subframe, locations of center frequencies of the RB signal generated in each subframe, the local oscillation signal corresponding to the RB signal, and the radio frequency signal are shown in FIG. 10. The radio frequency signal generated in each subframe does not include the CIM3.

Similar to a principle in which the terminal device generates the CIM3 in a process of generating the radio frequency signal, when a harmonic product generated by the up-converter in the transmitter of the terminal device is amplified by the amplifier, due to nonlinearity of the amplifier, a finally obtained radio frequency signal still includes a fifth-order intermodulation product with a center frequency of Sfl+fbb, a seventh-order intermodulation product with a center frequency of 7flo-fbb, or even a higher-order intermodulation product. The terminal device 600 provided in this embodiment of this application maintains the frequency of the RB signal at a zero frequency, and performs corresponding adjustment on the local oscillation signal based on the offset of the center frequency of the RB signal, thereby eliminating interference of a fifth-order intermodulation product, a seventh-order intermodulation product, or even a higher-order intermodulation product.

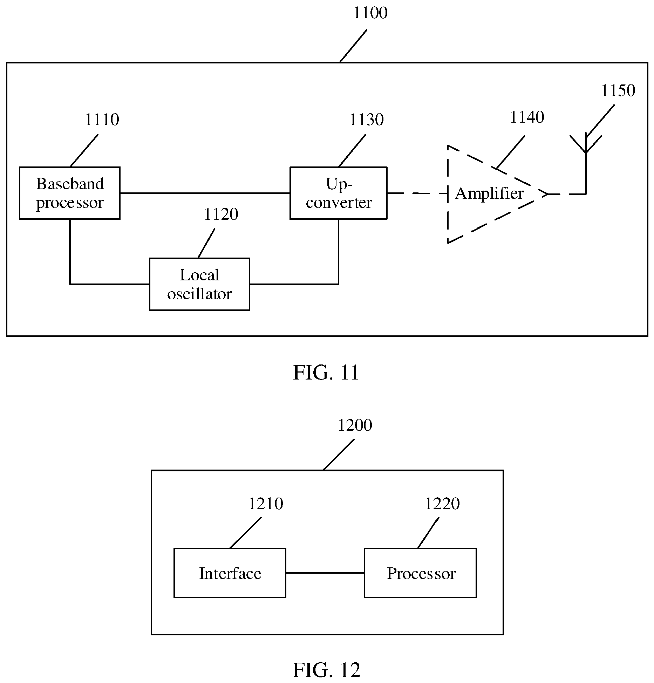

As shown in FIG. 11, this application further provides a transmitter 1100. The transmitter 1100 includes a baseband processor 1110, a local oscillator 1120, and an up-converter 1130. The baseband processor 1110 is separately connected to the local oscillator 1120 and the up-converter 1130, and the local oscillator 1120 is further connected to the up-converter 1130. The transmitter 1100 may be applied to a terminal device such as a mobile phone, or may be applied to a network side device such as a base station.

The baseband processor 1110 is configured to: determine an offset $\Delta f$ of a center frequency of an RB signal relative to a zero frequency, and control the local oscillator 1120 to adjust a center frequency flo of a local oscillation signal generated by the local oscillator 1120 to flo+Δf.

The local oscillator 1120 is configured to adjust, under control of the baseband processor 1110, the center frequency flo of the local oscillation signal generated by the local oscillator 1120 to flo+Δf.

The up-converter 1130 is configured to generate a radio frequency signal, where the radio frequency signal is obtained by performing, by the up-converter 1130, up-conversion processing on the RB signal whose center frequency is zero by using the local oscillation signal whose center frequency is adjusted.

The RB signal may be a single RB signal or a partial RB signal, and the partial RB signal includes a plurality of single RB signals that are consecutive in frequency domain. When the RB signal is a partial RB signal, a center frequency of the partial RB signal is a frequency at a central location of an RB occupied by the plurality of single RB signals that are consecutive in frequency domain.

Further, when determining the offset Δf of the center frequency of the RB signal relative to the zero frequency, the baseband processor 1110 is specifically configured to: obtain uplink indication information sent by a base station, where the uplink indication information includes location information of an RB occupied by the RB signal; and determine the offset Δf of the center frequency of the RB signal relative to the zero frequency based on the location information of the RB occupied by the RB signal.

Further, when controlling the local oscillator 1120 to adjust the center frequency flo of the local oscillation signal generated by the local oscillator to flo+Δf, the baseband processor 1110 is specifically configured to generate a control signal based on the offset Δf of the center frequency of the RB signal relative to the zero frequency, where the control signal is used to control the local oscillator 1120 to shift the center frequency flo of the local oscillation signal to flo+Δf.

Further, the transmitter 1100 further includes an amplifier 1140, configured to amplify the radio frequency signal generated by the up-converter 1150.

According to the foregoing solution, the baseband processor 1110 in the transmitter 1100 controls the local oscillator 1120 to adjust the center frequency flo of the local oscillation signal to flo+Δf based on the offset Δf of the center frequency of the RB signal relative to the zero frequency, so that the up-converter 1130 performs, by using the local oscillation signal whose center frequency is adjusted, up-conversion on the RB signal whose center frequency is zero, to obtain the radio frequency signal. This solution does not comply with a principle for generating CIM3, CIM5, CIM7, or a higher-order intermodulation product, and therefore can eliminate an intermodulation product such as CIM3 in the radio frequency signal generated by the up-converter 1130, and further eliminate interference of the intermodulation product such as CIM3 to the guard band. In addition, there is no need to add new hardware in a process in which the transmitter 1100 eliminates interference of the intermodulation product such as CIM3 to the guard band, helping reduce costs of the transmitter 1100.

It should be noted that a principle for eliminating an intermodulation product such as CIM3 by the transmitter 1100 is the same as a principle for eliminating an intermodulation product such as CIM3 by the terminal device 600. Details are not described herein again. Refer to related descriptions of the principle for eliminating an intermodulation product such as CIM3 by the terminal device 600.

As shown in FIG. 12, this application further provides a baseband chip 1200. The baseband chip 1200 includes an interface 1210 and a processor 1220.

The interface 1210 is configured to receive code instructions, and transmit the received code instructions to the processor 1220.

The processor 1220 is configured to run the received code instructions sent by the interface 1210, to perform the following operations: determining an offset Δf of a center frequency of an RB signal relative to a zero frequency; and controlling a local oscillator to adjust a center frequency flo of a local oscillation signal generated by the local oscillator to flo+Δf, where the local oscillation signal whose center frequency is adjusted is used to perform up-conversion processing on the RB signal whose center frequency is zero.

The RB signal may be a single RB signal or a partial RB signal, and the partial RB signal includes a plurality of single RB signals that are consecutive in frequency domain. When the RB signal is a partial RB signal, a center frequency of the partial RB signal is a frequency at a central location of an RB occupied by the plurality of single RB signals that are consecutive in frequency domain.

Further, the interface 1210 is further configured to obtain uplink indication information sent by a base station, where the uplink indication information includes location information of an RB occupied by the RB signal. When determining the offset Δf of the center frequency of the RB signal relative to the zero frequency, the processor 1220 is specifically configured to determine the offset Δf of the center frequency of the RB signal relative to the zero frequency based on the location information of the RB occupied by the RB signal in the uplink indication information.

Further, when controlling the local oscillator to adjust the center frequency flo of the local oscillation signal generated by the local oscillator to flo+Δf, the processor 1220 is specifically configured to generate a control signal based on the offset Δf of the center frequency of the RB signal relative to the zero frequency, where the control signal is used to control the local oscillator to shift the center frequency flo of the local oscillation signal to flo+Δf.

According to the foregoing solution, the processor 1220 in the baseband chip 1200 controls the local oscillator 1120 to adjust the center frequency flo of the local oscillation signal to flo+Δf based on the offset Δf of the center frequency of the RB signal relative to the zero frequency, so that up-conversion is performed, by using the local oscillation signal whose center frequency is adjusted, on the RB signal whose center frequency is zero, to obtain a radio frequency signal. This solution does not comply with a principle for generating CIM3, CIM5, CIM7, or a higher-order intermodulation product, and therefore can eliminate an intermodulation product such as CIM3 in the generated radio frequency signal, and further eliminate interference of the intermodulation product such as CIM3 to the guard band.

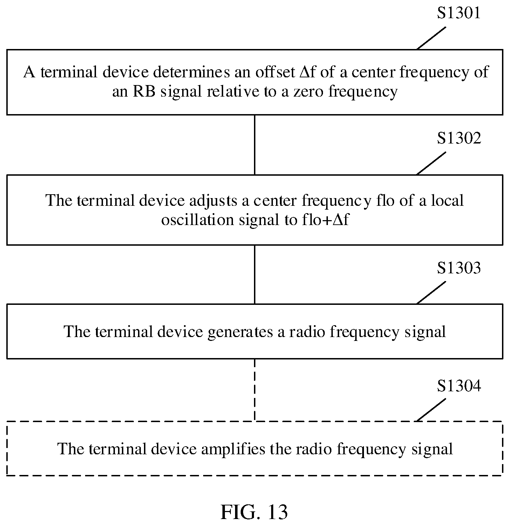

As shown in FIG. 13, for a scenario in which the terminal device transmits a single RB signal or a partial (partical) RB signal (the partial RB signal includes at least two single RB signals that are consecutive in frequency domain), that is, a scenario in which a center frequency of an RB signal to be transmitted by the terminal device is not at a zero frequency, where the RB signal is a basic unit that forms a baseband signal, this application further provides a radio frequency signal generation method. The method mainly includes the following steps:

S1301. The terminal device determines an offset Δf of a center frequency of an RB signal relative to a zero frequency.

Specifically, the terminal device determines, by using a baseband processor in the terminal device, an offset Δf of the center frequency of the RB signal relative to the zero frequency, and maintains the center frequency of the RB signal at the zero frequency.

The RB signal may be a single RB signal or a partial RB signal, and the partial RB signal includes a plurality of single RB signals that are consecutive in frequency domain. When the RB signal is a partial RB signal, a center frequency of the partial RB signal is a frequency at a central location of an RB occupied by the plurality of single RB signals that are consecutive in frequency domain. When the RB signal is a single RB signal, an offset Δf of a center frequency f1 of the RB signal relative to a zero frequency is a frequency at a center of the RB signal. When the RB signal is a partial RB signal, an offset Δf of a center frequency f1 of the RB signal relative to a zero frequency is a frequency at a center of an RB occupied by at least two single RB signals that are consecutive in frequency domain in the partial RB signal.

S 1302. The terminal device adjusts a center frequency flo of the local oscillation signal to flo+Δf.

Specifically, the terminal device controls the local oscillator in the terminal device by using the baseband processor in the terminal device, and adjusts the center frequency flo of the local oscillation signal to flo+Δf. The local oscillator may be implemented by using a phase-locked loop.

S1303. The terminal device generates a radio frequency signal, where the radio frequency signal is obtained by performing, by the terminal device, up-conversion processing on the RB signal whose center frequency is zero by using the local oscillation signal whose center frequency is adjusted.

Specifically, the terminal device performs, by using an up-converter in the terminal device, up-conversion processing on an RB signal whose center frequency is zero by using a local oscillation signal whose center frequency is adjusted.

Further, in step S1301, the terminal device can specifically determine the offset Δf of the center frequency of the RB signal relative to the zero frequency by using the following steps: obtaining uplink indication information sent by a base station, where the uplink indication information includes location information of an RB occupied by the RB signal; and determining the offset Δf of the center frequency of the RB signal relative to the zero frequency based on the location information of the RB occupied by the RB signal in the uplink indication information.

Specifically, the terminal device can determine the offset Δf of the center frequency f1 of the RB signal relative to the zero frequency in the following manner: receiving an uplink grant indication delivered by the base station, and determining the offset Δf of the center frequency f1 of the RB signal relative to the zero frequency according to the uplink grant indication. The uplink grant indication includes the location information of the RB occupied by the RB signal (a start location and an end location of the RB occupied by the RB signal). The location information of the RB occupied by the RB signal is determined by the base station by comprehensively scheduling a time-frequency resource in an operating frequency band based on a quantity of terminal devices currently performing communication through the base station.

Further, in step S1302, the terminal device can adjust the center frequency flo of the local oscillation signal to flo+Δf in the following manner: shifting the center frequency flo of the local oscillation signal to flo+Δf based on the offset Δf of the center frequency of the RB signal relative to the zero frequency. Specifically, the baseband processor in the terminal device generates a control signal based on the offset Δf of the center frequency of the RB signal relative to the zero frequency, and controls, by using the control signal, a phase-locked loop in the terminal device to shift a center frequency flo of the local oscillation signal to flo+Δf.

Further, after generating the radio frequency signal, the terminal device may further perform step 1304: amplifying the radio frequency signal.

According to the foregoing steps S1301 to S1303, the terminal device maintains the frequency of the RB signal at the zero frequency, and performs corresponding adjustment on the local oscillation signal based on the offset of the center frequency of the RB signal. This does not comply with a mechanism for generating CIM3, and does not generate CIM3, CIM5, CIM7, or a higher-order intermodulation product, and therefore can eliminate interference caused by an intermodulation product such as CIM3 to communication in the guard band. In addition, because the CIM3, the CIM5, the CIM7, or the higher-order intermodulation product is not generated in the radio frequency signal that is generated by using S1301 to S1303, there is no need to perform filtering processing on the obtained radio frequency signal after the radio frequency signal is generated, or generate a local oscillation signal with a duty cycle of 33% to reduce interference of an intermodulation product such as CIM3, and further, there is no need to add new hardware to the terminal device, thereby reducing costs of the terminal device.

It should be noted that, in the foregoing steps S1301 to S1303, a principle for eliminating an intermodulation product such as CIM3 by the terminal device is the same as a principle for eliminating an intermodulation product such as CIM3 by the terminal device 600. Details are not described herein again. Refer to related descriptions of the principle for eliminating an intermodulation product such as CIM3 by the terminal device 600.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that, a person skilled in the art can make various modifications and variations to the embodiments of this application. This application is intended to cover these modifications and variations provided that they fall within the scope of protection defined by the following claims.

## Claims

1. A transmitter, comprising a baseband processor (620), a local oscillator (630), an up-converter (640), and an amplifier (650), wherein

   the baseband processor (620) is configured to: determine an offset $\Delta f$ of a center frequency of a resource block, RB, signal relative to a zero frequency, and control the local oscillator (630) to adjust a center frequency flo of a local oscillation signal generated by the local oscillator (630) to flo+$\Delta f$;
   the local oscillator (630) is configured to adjust, under control of the baseband processor (620), the center frequency flo of the local oscillation signal generated by the local oscillator (630) to flo+$\Delta f$;
   the up-converter (640) is configured to generate a radio frequency signal, wherein the radio frequency signal is obtained by performing, by the up-converter (640), up-conversion processing on the RB signal whose center frequency is zero by using the local oscillation signal whose center frequency is adjusted;
   the amplifier (650) is configured to amplify the radio frequency signal generated by the up-converter (640); and
   a relationship between an input signal X and an output signal Y of the amplifier (650) is expressed as $Y=aX+(aX)^3$, where a represents a gain of the amplifier (650) and $(aX)^3$ represents nonlinearity of the amplifier (650);
   **characterized in that**
   the RB signal is a partial RB signal;
   the partial RB signal includes a plurality of single RB signals that are consecutive in frequency domain;
   a center frequency of the partial RB signal is a frequency at a central location of an RB occupied by a plurality of single RB signals that are consecutive in frequency domain in the partial RB signal; and
   when determining the offset $\Delta f$ of the center frequency of the RB signal relative to the zero frequency, the baseband processor (620) is specifically configured to:

   obtain uplink indication information sent by a base station, wherein the uplink indication information comprises location information of an RB occupied by the RB signal; and
determine the offset Δf of the center frequency of the RB signal relative to the zero frequency based on the location information of the RB occupied by the RB signal, wherein the uplink indication information is an uplink grant indication and the location information comprises a start location and an end location of the RB occupied by the RB signal.

2. The transmitter according to claim 1, wherein when controlling the local oscillator (630) to adjust the center frequency flo of the local oscillation signal generated by the local oscillator to flo+Δf, the baseband processor (620) is specifically configured to:

generate a control signal based on the offset Δf of the center frequency of the RB signal relative to the zero frequency, wherein the control signal is used to control the local oscillator (630) to shift the center frequency flo of the local oscillation signal to flo+Δf.

3. A terminal device (600), comprising an application processor (610), and the transmitter according to claim 1 or 2, wherein
the application processor (610) is configured to trigger the baseband processor (620) of the transmitter to send the RB signal.

4. A radio frequency signal generation method, comprising:

determining (S1301), by a baseband processor of a transmitter, an offset Δf of a center frequency of the RB signal relative to a zero frequency;
adjusting (S1302), by a local oscillator of the transmitter, a center frequency flo of a local oscillation signal to flo+Δf,
generating (S1303), by an up-converter of the transmitter, a radio frequency signal, wherein the radio frequency signal is obtained by performing, by the terminal device, up-conversion processing on the RB signal whose center frequency is zero by using the local oscillation signal whose center frequency is adjusted; and
amplifying (S1304), by an amplifier of the transmitter, the radio frequency signal generated by the up-converter, wherein a relationship between an input signal X and an output signal Y of the amplifier is expressed as $Y=aX+(aX)^3$, where a represents a gain of the amplifier and $(aX)^3$ represents nonlinearity of the amplifier;
**characterized in that**
the RB signal is a partial RB signal;
the partial RB signal includes a plurality of single RB signals that are consecutive in frequency domain;
a center frequency of the partial RB signal is a frequency at a central location of an RB occupied by a plurality of single RB signals that are consecutive in frequency domain in the partial RB signal;
the determining (S1301), by a baseband processor of a transmitter, an offset Δf of a center frequency of the RB signal relative to a zero frequency comprises:

obtaining, by the baseband processor of the transmitter, uplink indication information sent by a base station, wherein the uplink indication information comprises location information of an RB occupied by the RB signal; and
determining, by the baseband processor of the transmitter, the offset Δf of the center frequency of the RB signal relative to the zero frequency based on the location information of the RB occupied by the RB signal, wherein the uplink indication information is an uplink grant indication and the location information comprises a start location and an end location of the RB occupied by the RB signal.

**Patentansprüche**

1. Sender, umfassend einen Basisbandprozessor (620), einen lokalen Oszillator (630), einen Aufwärtswandler (640) und einen Verstärker (650), wobei
der Basisbandprozessor (620) zu Folgendem konfiguriert ist:

Bestimmen eines Versatzes Δf einer Mittenfrequenz eines Signals eines Ressourcenblocks (Resource Block, RB) relativ zu einer Nullfrequenz und Steuern des lokalen Oszillators (630), um eine Mittenfrequenz flo eines durch den lokalen Oszillator (630) erzeugten lokalen Oszillationssignals auf flo+Δf einzustellen;
der lokale Oszillator (630) dazu konfiguriert ist, unter der Steuerung des Basisbandprozessors (620), die Mittenfrequenz flo des durch den lokalen Oszillator (630) erzeugten lokalen Oszillationssignals auf flo+Δf einzustellen;

der Aufwärtswandler (640) dazu konfiguriert ist, ein Hochfrequenzsignal zu erzeugen, wobei das Radiofrequenzsignal erlangt wird, indem der Aufwärtswandler (640) eine Aufwärtswandlungsverarbeitung an dem RB-Signal, dessen Mittenfrequenz null ist, unter Verwendung des lokalen Oszillationssignals durchführt, dessen Mittenfrequenz eingestellt ist;

der Verstärker (650) dazu konfiguriert ist, das durch den Aufwärtswandler (640) erzeugte Radiofrequenzsignal zu verstärken; und

eine Beziehung zwischen einem Eingangssignal X und einem Ausgangssignal Y des Verstärkers (650) als $Y=aX+(aX)^3$ ausgedrückt wird, wobei a eine Verstärkung des Verstärkers (650) und $(aX)^3$ eine Nichtlinearität des Verstärkers (650) darstellt;

**dadurch gekennzeichnet, dass**

das RB-Signal ein partielles RB-Signal ist;

das partielle RB-Signal eine Vielzahl von einzelnen RB-Signalen einschließt, die im Frequenzbereich aufeinanderfolgen;

eine Mittenfrequenz des partiellen RB-Signals eine Frequenz an einem zentralen Ort eines RB ist, der von einer Vielzahl von einzelnen RB-Signalen belegt wird, die im Frequenzbereich in dem partiellen RB-Signal aufeinanderfolgen; und

bei dem Bestimmen des Versatzes Δf der Mittenfrequenz des RB-Signals relativ zu der Nullfrequenz der Basisbandprozessor (620) speziell zu Folgendem konfiguriert ist:

Erlangen von Uplink-Anzeigeinformationen, die durch eine Basisstation gesendet werden, wobei die Uplink-Anzeigeinformationen Ortsinformationen eines RB, der von dem RB-Signal belegt ist, umfassen; und Bestimmen des Versatzes Δf der Mittenfrequenz des RB-Signals relativ zu der Nullfrequenz basierend auf den Ortsinformationen des RB, der vom RB-Signal belegt ist, wobei die Uplink-Anzeigeinformationen eine Uplink-Freigabeanzeige sind und die Ortsinformationen einen Startort und einen Endort des RB, der vom RB-Signal belegt ist, umfassen.

2. Sender gemäß Anspruch 1, wobei bei dem Steuern des lokalen Oszillators (630), um die Mittenfrequenz flo des durch den lokalen Oszillator erzeugten lokalen Oszillationssignals auf flo+Δf einzustellen, der Basisbandprozessor (620) speziell zu Folgendem konfiguriert ist:

Erzeugen eines Steuersignals basierend auf dem Versatz Δf der Mittenfrequenz des RB-Signals relativ zur Nullfrequenz, wobei das Steuersignal zum Steuern des lokalen Oszillators (630) verwendet wird, um die Mittenfrequenz flo des lokalen Oszillationssignals auf flo+Δf zu verschieben.

3. Endgerät (600), umfassend einen Anwendungsprozessor (610) und den Sender gemäß Anspruch 1 oder 2, wobei der Anwendungsprozessor (610) dazu konfiguriert ist, den Basisbandprozessor (620) des Senders zu veranlassen, das RB-Signal zu senden.

4. Verfahren zur Erzeugung eines Radiofrequenzsignals, umfassend:

Bestimmen (S1301), durch einen Basisbandprozessor eines Senders, eines ersten Versatzes Δf einer Mittenfrequenz des RB-Signals relativ zu einer Nullfrequenz;

Einstellen (S1302), durch einen lokalen Oszillator des Senders, einer Mittenfrequenz flo eines lokalen Oszillationssignals auf flo +Δf;

Erzeugen (S1303), durch einen Aufwärtswandler des Senders, eines Radiofrequenzsignals, wobei das Radiofrequenzsignal durch das Ausführen, durch ein Endgerät, einer Aufwärtswandlungsverarbeitung des RB-Signals, dessen Mittenfrequenz null ist, unter Verwendung des lokalen Oszillationssignals, dessen Mittenfrequenz eingestellt ist, erlangt wird; und

Verstärken (S1304), durch einen Verstärker des Senders, des Radiofrequenzsignals, das durch den Aufwärtswandler erzeugt wird,

wobei eine Beziehung zwischen einem Eingangssignal X und einem Ausgangssignal Y des Verstärkers als $Y=aX+(aX)^3$ ausgedrückt wird, wobei a eine Verstärkung des Verstärkers und $(aX)^3$ eine Nichtlinearität des Verstärkers darstellt;

**dadurch gekennzeichnet, dass**

das RB-Signal ein partielles RB-Signal ist;

das partielle RB-Signal eine Vielzahl von einzelnen RB-Signalen einschließt, die im Frequenzbereich aufeinanderfolgen;

eine Mittenfrequenz des partiellen RB-Signals eine Frequenz an einem zentralen Ort eines RB ist, der von einer Vielzahl von einzelnen RB-Signalen belegt wird, die im Frequenzbereich in dem partiellen RB-Signal aufeinanderfolgen;

das Bestimmen (S1301), durch einen Basisbandprozessor eines Senders, eines ersten Versatzes Δf einer Mittenfrequenz des RB-Signals relativ zu einer Nullfrequenz Folgendes umfasst:

Erlangen, durch den Basisbandprozessor des Senders, von Uplink-Anzeigeinformationen, die von einer Basisstation gesendet werden, wobei die Uplink-Anzeigeinformationen Ortsinformationen eines RB, der von dem RB-Signal belegt ist, umfassen; und

Bestimmen, durch den Basisbandprozessor des Senders, des Versatzes Δf der Mittenfrequenz des RB-Signals relativ zu der Nullfrequenz basierend auf den Ortsinformationen des RB, der vom RB-Signal belegt ist, wobei die Uplink-Anzeigeinformationen eine Uplink-Freigabeanzeige sind und die Ortsinformationen einen Startort und einen Endort des RB, der vom RB-Signal belegt ist, umfassen.

**Revendications**

1. Émetteur, comprenant un processeur de bande de base (620), un oscillateur local (630), un convertisseur élévateur (640) et un amplificateur (650), dans lequel
le processeur de bande de base (620) est configuré pour :

déterminer un décalage Δf d'une fréquence centrale d'un signal de bloc de ressources, RB, par rapport à une fréquence nulle, et commander l'oscillateur local (630) pour régler une fréquence centrale flo d'un signal d'oscillation locale généré par l'oscillateur local (630) à flo+Δf ;
l'oscillateur local (630) est configuré pour régler, sous la commande du processeur de bande de base (620), la fréquence centrale flo du signal d'oscillation locale généré par l'oscillateur local (630) à flo+Δf ;
le convertisseur élévateur (640) est configuré pour générer un signal radiofréquence, dans lequel le signal radiofréquence est obtenu par la réalisation, par le convertisseur élévateur (640), d'un traitement de conversion ascendante sur le signal RB dont la fréquence centrale est nulle à l'aide du signal d'oscillation locale dont la fréquence centrale est réglée ;
l'amplificateur (650) est configuré pour amplifier le signal radiofréquence généré par le convertisseur élévateur (640) ; et
une relation entre un signal d'entrée X et un signal de sortie Y de l'amplificateur (650) est exprimée comme $Y=aX+(aX)^3$, où a représente un gain de l'amplificateur (650) et $(aX)^3$ représente la non-linéarité de l'amplificateur (650) ;
**caractérisé en ce que**
le signal RB est un signal RB partiel ;
le signal RB partiel comporte une pluralité de signaux RB simples qui sont consécutifs dans le domaine fréquentiel ;
une fréquence centrale du signal RB partiel est une fréquence à un emplacement central d'un RB occupé par une pluralité de signaux RB simples qui sont consécutifs dans le domaine fréquentiel dans le signal RB partiel ; et
lors de la détermination du décalage Δf de la fréquence centrale du signal RB par rapport à la fréquence nulle, le processeur de bande de base (620) est spécifiquement configuré pour :

obtenir des informations d'indication de liaison montante envoyées par une station de base, dans lequel les informations d'indication de liaison montante comprennent des informations d'emplacement d'un RB occupé par le signal RB ; et
déterminer le décalage Δf de la fréquence centrale du signal RB par rapport à la fréquence nulle sur la base des informations d'emplacement du RB occupé par le signal RB, dans lequel les informations d'indication de liaison montante sont une indication d'octroi de liaison montante et les informations d'emplacement comprennent un emplacement de départ et un emplacement de fin du RB occupé par le signal RB.

2. Émetteur selon la revendication 1, dans lequel, lors de la commande de l'oscillateur local (630) pour régler la fréquence centrale flo du signal d'oscillation locale généré par l'oscillateur local à flo+Δf, le processeur de bande de base (620) est spécifiquement configuré pour :
générer un signal de commande sur la base du décalage Δf de la fréquence centrale du signal RB par rapport à la fréquence nulle, dans lequel le signal de commande est utilisé pour commander l'oscillateur local (630) pour décaler la fréquence centrale flo du signal d'oscillation local à flo+Δf.

3. Dispositif terminal (600), comprenant un processeur d'application (610), et l'émetteur selon la revendication 1 ou 2, dans lequel
le processeur d'application (610) est configuré pour déclencher le processeur de bande de base (620) de l'émetteur pour envoyer le signal RB.

4.  Procédé de génération de signal radiofréquence, comprenant :

la détermination (S1301), par un processeur de bande de base d'un émetteur, d'un décalage Δf d'une fréquence centrale du signal RB par rapport à une fréquence nulle ;
le réglage (S1302), par un oscillateur local de l'émetteur, d'une fréquence centrale flo d'un signal d'oscillation locale à flo +Δf ;
la génération (S1303), par un convertisseur élévateur de l'émetteur, d'un signal radiofréquence, dans lequel le signal radiofréquence est obtenu par la réalisation, par le dispositif terminal, d'un traitement de conversion ascendante sur le signal RB dont la fréquence centrale est nulle à l'aide du signal d'oscillation locale dont la fréquence centrale est réglée ; et
l'amplification (S1304), par un amplificateur de l'émetteur, du signal radiofréquence généré par le convertisseur élévateur,
dans lequel une relation entre un signal d'entrée X et un signal de sortie Y de l'amplificateur est exprimée comme $Y=aX+(aX)^3$, où a représente un gain de l'amplificateur et $(aX)^3$ représente la non-linéarité de l'amplificateur ;
**caractérisé en ce que**
le signal RB est un signal RB partiel ;
le signal RB partiel comporte une pluralité de signaux RB simples qui sont consécutifs dans le domaine fréquentiel ;
une fréquence centrale du signal RB partiel est une fréquence à un emplacement central d'un RB occupé par une pluralité de signaux RB simples qui sont consécutifs dans le domaine fréquentiel dans le signal RB partiel ;
la détermination (S1301), par un processeur de bande de base d'un émetteur, d'un décalage Δf d'une fréquence centrale du signal RB par rapport à une fréquence nulle comprend :

l'obtention, par le processeur de bande de base de l'émetteur, d'informations d'indication de liaison montante envoyées par une station de base, dans lequel les informations d'indication de liaison montante comprennent des informations d'emplacement d'un RB occupé par le signal RB ; et
la détermination, par le processeur de bande de base de l'émetteur, du décalage Δf de la fréquence centrale du signal RB par rapport à la fréquence nulle sur la base des informations d'emplacement du RB occupé par le signal RB, dans lequel les informations d'indication de liaison montante sont une indication d'octroi de liaison montante et les informations d'emplacement comprennent un emplacement de départ et un emplacement de fin du RB occupé par le signal RB.

FIG. 1

FIG. 2

| | Subframe 1 | Subframe 2 | Subframe 3 | | Subframe N |
|---|---|---|---|---|---|
| Location of a center frequency of an RB signal in a current technology | Full (full) RB — 0 f | Single RB — 0 fbb f | -fbb 0 f | | Partial (partical) RB — -fbb 0 f |
| Location of a center frequency of a local oscillation signal in a current technology | flo f | flo f | flo f | | flo f |
| Location of a center frequency of a radio frequency signal transmitted by a transmitter in a current technology | flo | CIM3 — flo-3fbb flo+fbb | flo-fbb CIM3 flo+3fbb | | flo-fbb CIM3 flo+3fbb |

FIG. 3

FIG. 4

FIG. 5

FIG. 6

FIG. 7

First
product        Second        Nonlinearity
               product        Third
                              product

                                            No CIM3

flo+fbb    3flo+3fbb   5flo+5fbb          flo-3fbb  flo+fbb

                    Up-converter                    Amplifier

0
RB signal

Δf          PLL

                                        Local oscillation
                                        signal whose center
                                        frequency is shifted
flo+fbb  3flo+3fbb  5flo+5fbb

FIG. 8

| | | |
|---|---|---|
| Location of a center frequency of an RB signal in a current technology | 0      fbb   f | -fbb     0        f |
| Location of a center frequency of a local oscillation signal in a current technology | flo       f | flo       f |
| Radio frequency signal transmitted by a transmitter in a current technology | CIM3 <br> flo-3fbb     flo+fbb | CIM3 <br> flo-fbb     flo+3fbb |
| Location of a center frequency of an RB signal in this application | 0        f | 0        f |
| Location of a center frequency of a local oscillation signal in this application | flo+fbb | flo-fbb |
| Radio frequency signal transmitted by a transmitter in this application | No CIM3 <br> flo+fbb | No CIM3 <br> flo-fbb |

FIG. 9

| | Subframe 1 | Subframe 2 | Subframe 4 | | Subframe N |
|---|---|---|---|---|---|

Location of a center frequency of an RB signal

Location of a center frequency of a local oscillation signal

Radio frequency signal transmitted by a transmitter

FIG. 10

1100

1110

1130

1140

1150

| Baseband processor | | Up-converter | Amplifier |

1120

| Local oscillator |

FIG. 11

1200

1210

1220

| Interface | Processor |

FIG. 12

S1301

A terminal device determines an offset Δf of a center frequency of an RB signal relative to a zero frequency

S1302

The terminal device adjusts a center frequency flo of a local oscillation signal to flo+Δf

S1303

The terminal device generates a radio frequency signal

S1304

The terminal device amplifies the radio frequency signal

FIG. 13

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017310458 A1
- EP 3016340 A1